# EUROPEAN PATENT SPECIFICATION

(11) **EP 1 693 800 B1**
(45) Date of publication and mention of the grant of the patent: **18.11.2009**
(21) Application number: 06003108.5
(22) Date of filing: 16.02.2006
(51) Int. Cl.: G06T 17/50, G01C 21/32

(54) **Map processor, navigation device and map displaying method**
Kartenprozessor, Navigationsvorrichtung und Kartenanzeigevorrichtung
Processeur de cartes, dispositif de navigation et procédé d'affichage de cartes

(30) Priority: 16.02.2005 JP 2005038563
(43) Date of publication of application: 23.08.2006
(73) Proprietor: Xanavi Informatics Corporation, Zama-shi, Kanagawa 228-0012 (JP)
(72) Inventor: Asahara, Akinori c/o Hitachi, Ltd., I.P. Group, 1-chome Chiyoda-ku Tokyo 100-8220 (JP); Tanizaki, Masaaki c/o Hitachi, Ltd., I.P. Group, 1-chome Chiyoda-ku Tokyo 100-8220 (JP); Maruyama, Kishiko c/o Hitachi, Ltd., I.P. Group, 1-chome Chiyoda-ku Tokyo 100-8220 (JP); Shimada, Shigeru c/o Hitachi, Ltd., I.P. Group, 1-chome Chiyoda-ku Tokyo 100-8220 (JP); Sumizawa, Akio, Zama-shi Kanagawa 228-0012 (JP)
(74) Representative: MERH-IP Matias Erny Reichl Hoffmann

(56) References cited:
- US-A1- 2001 034 588
- US-A1- 2002 049 532
- US-A1- 2004 044 468
- US-A1- 2004 236 507

## Description

### BACKGROUND OF THE INVENTION

The present invention relates to a technique for summarizing a map and displaying the summarized map.

Among devices that summarize an original map for easy viewing and present it on a screen of display, there is one that deforms the map as by linearizing roads using a potential model (for example, JP-A-2004-139485). There is also a navigation device that divides a deformed map and displays it on a very small screen to guide the user on the divided map (for example, JP-A-2002-139344).

With the above conventional technique the entire map displayed on one screen is deformed simultaneously by one and the same method. Thus, the conventional technique cannot summarize individual regions in the map optimally according to their features. In the device disclosed in JP-A-2002-139344, since the division of the map is determined by an input from the user, a portion of the map with a detailed representation of routes and a portion with a simplified representation can be displayed separately according to a selection made by the user. It is however not possible to summarize the finely represented portion and the coarsely represented portion at once and display them on one screen. As a result, in a map covering a wide range, a high-quality summarized display cannot be made.

US 2002049532 discloses a navigation system for vehicles which draws map information in drawing memory with smaller reduction scale factor than that of area which includes screen center.

### SUMMARY OF THE INVENTION

Another representative aspect of this invention provides a map processor as defined in claim 1.

With this invention, a map is divided into a plurality of regions with different characteristics and these regions are presented on the display in different methods to allow optimal information to be displayed on one screen. This makes it possible for the user to obtain necessary information for his or her needs even when a map with an excessive volume of information is displayed on one screen.

Other objects, features and advantages of the invention will become apparent from the following description of the embodiments of the invention taken in conjunction with the accompanying drawings.

### BRIEF DESCRIPTION OF THE DRAWINGS

Fig. 1 is an overall configuration of a car navigation system as one embodiment of this invention.
Fig. 2 shows a flow of processing that accepts inputs from the user and search routes. This is one of practical processing incorporating the present invention.
Fig. 3 shows one example flow of summarization processing in this invention.
Fig. 4 shows an example of processing that divides map data into a plurality of regions according to redundancy.
Fig. 5 illustrates a generally known method of measuring a box dimension, an index that can be deemed almost equivalent to fractal dimension.
Fig. 6 shows an example of processing that combines divided maps so that map division is made according to redundancy levels.
Fig. 7 shows an example of summarization method based on the minimax method.
Fig. 8 shows an example method for matching map boundaries.
Fig. 9 is an example view on screen in which a plurality of routes are presented during the route selection.
Fig. 10 shows an example view in which a plurality of routes of Fig. 8 are summarized with a low summarization level.
Fig. 11 shows an example view in which a plurality of routes of Fig. 8 are summarized with a high summarization level.
Fig. 12 shows an example result obtained by dividing a plurality of routes of Fig. 8 according to redundancy and summarizing the divided regions by the minimax method.
Fig. 13 shows an example result obtained by dividing a plurality of routes of Fig. 8 according to redundancy and summarizing a redundant portion with spline curves and other portions with straight lines.
Fig. 14 is an example view, as applied in a real system, showing an alternative route at high summarization level.
Fig. 15 is an example view of map data showing an alternative route.
Fig. 16 is an example view showing an alternative route at low summarization level.
Fig. 17 is an example view showing an alternative route, with areas near the start point and destination of the route summarized at a different summarization level from other areas.
Fig. 18 is an example view, as applied in a real system, showing an alternative route, with areas near the start point and destination of the route summarized at a different summarization level from other areas.

### DESCRIPTION OF THE EMBODIMENTS

This invention summarizes a map by using different summarization methods according to different redundancies of the map. The redundancy of the map referred to in this specification means an index that represents a quality and quantity of unnecessary information among the information included in the map. Any arbitrary index may be used which can estimate whether the summarization of interest will work effectively. For example, a distance from start and end points of a detour is a redundancy index in that it indicates how much information about junctions of roads is included in the map. Another example is information about whether the road runs through a mountainous region or town. This information is also an index representing a redundancy in that, in the mountainous region, the road is long although there is no necessary information.

"Different summarization methods" mean methods of changing original map data when presenting the map information on a display, such as changing the depicted shapes of map elements, turning on or off map elements on the screen, moving and rotating the positions of map elements, and changing the way the map elements move. If the degree of these changes can be changed stepwise, an index representing the degree of change is called a summarization level.

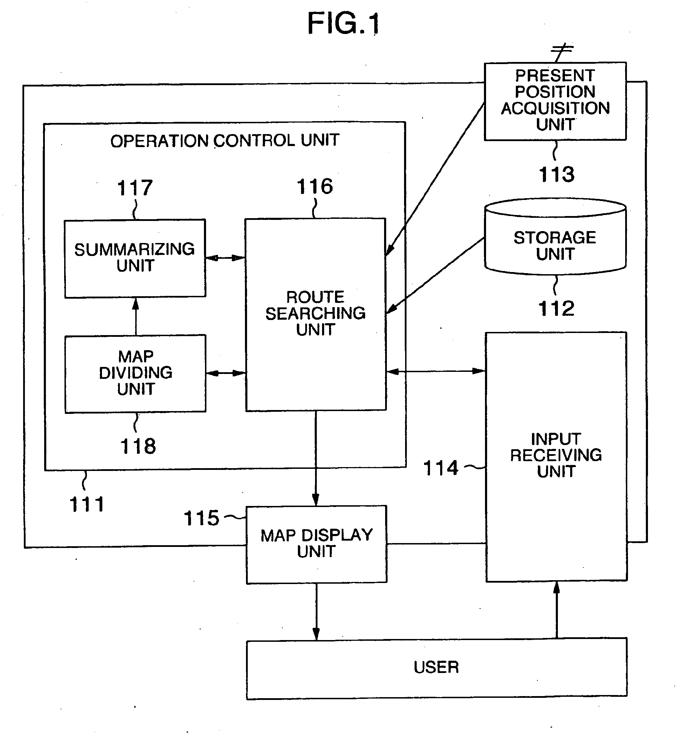

A car-mounted navigation device as one embodiment of this invention is shown in Fig. 1. A feature of this embodiment is that, in presenting a plurality of candidate routes searched, the on-board navigation device summarizes the route data with an appropriate summarization level that matches a degree of complexity of the portion of the route being considered and displays the summarized data, thus allowing the user to easily determine which route should be taken. The degree of complexity referred to in this specification is an index that represents a level of complexity of map elements in a region determined by an arbitrary map element or a combination of map elements, the map elements being map data including road and coastline configurations, POIs (points of interest on the map) and background information such as names of places. For example, as the degree of complexity a value may be used that is calculated from the shape of figures, such as a sum of a line density and the number of POIs. The degree of complexity may use values that are stored in advance as the map data, rather than being calculated on the spot. The degree of complexity in this specification is a kind of redundancy in that the routes are difficult to distinguish in a region where the routes are crowded (information density is high) and are easy to distinguish in a region where the routes are sparse (information density is low).

The navigation device comprises: an input receiving unit 114 to receive an instruction from the user, such as inputs from touch panel and switches; a storage unit 112 to store map data, such as DVD; a current position acquisition unit 113 to acquire a present location of the car; an operation control unit 111 made up of processors and memories; and a map display unit 115 such as a liquid crystal display.
When the user of this device enters a destination through the input unit, this device searches for possible routes from the current location obtained by the current position acquisition unit to a destination, generates a guide image and displays the guide image on the map display unit. The map data is information making up the map, including line segments representing roads, their network structure and background data such as coastlines and place names. The map data is retrieved from the storage unit in the device or from external computers through a network. Road data generally has a road portion between intersections recorded as one line segment, which is called a link. Links are connected at an intersection which is called a node. The road configuration is therefore represented by the links and nodes. The map data used in this embodiment is only one example. When a map stored as an image is to be subjected to filter processing before being shown on a display for example, this invention is advantageous in that it can use different filters for a redundant portion of the map and for others.

The map display unit uses a device capable of displaying an image, such as a liquid crystal display. The display may be provided with a touch sensor so that it can also serve as an input receiving unit. The map display unit is attached with a temporary storage unit to store an image to be displayed. Writing an image into the temporary storage unit can display the image.

The operation control unit is a general purpose computer and performs processing such as accepting inputs, searching for candidate routes and generation of map image. A plurality of computers may be interconnected with one another to perform distributed computing for enhanced processing speed. The computer as a server including the operation control unit may be located at a remote place and connected to other portions through a network. In that case, processing can be done by a high-performance computer, allowing for a more sophisticated summarization.

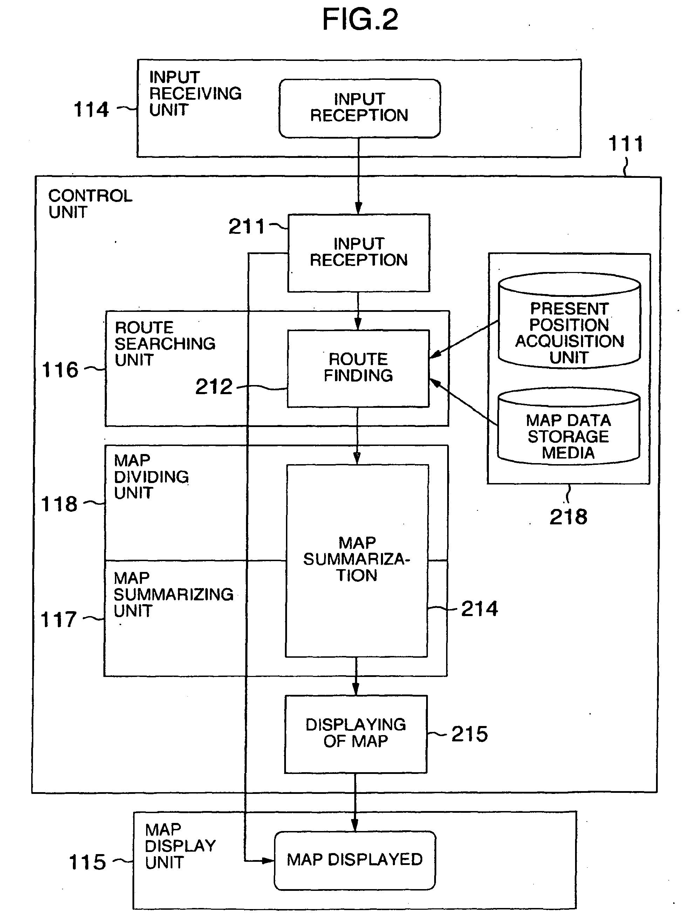

The route guidance by this device first lets the user decide which route will be followed and then guides the user through the chosen route. The device is characterized by the procedure of determining a route to be guided. One example of an operation flow performed by the operation control unit in the guide route determination procedure of this device is shown in Fig. 2. This diagram covers a processing flow from letting the user enter a destination and listing a plurality of candidate routes to the destination to letting the user choose a desired one.

The control unit receives a user input from the input unit and determines a destination interactively (step 211). For example, when the user enters a destination address, a map covering an area of that destination is shown on the map display unit. If the user selects a desired point on the map using the input unit, that point is selected as a destination.

Next, the control unit searches for possible routes to the destination.that was acquired through the input processing (step 212). The route search processing involves retrieving the present location from the current position acquisition unit 113, searching for possible routes from the present location to the destination and determining an optimum route. The route search can be made by the commonly known route search method. At this time, the route search may consider a plurality of conditions, such as a distance preference, a condition of not using highways and a time preference, to present a plurality of characteristic candidate routes.

The conventional method presents the candidate routes found by the route search processing as is to the user who then determines which route to be taken to get to the destination. In this invention, however, the configurations of the routes to be displayed are summarized to render their characteristics easily understandable so that the user can easily make a decision as to which route should be taken. This processing is called map summarization processing (step 214). Details of this processing will be explained later.

The map summarized by the map summarization processing is displayed on the display unit (step 215). The summarized route data obtained in the form of coordinate values is reduced or magnified according to the resolution of the screen and displayed on the image display unit after adjusting a coordinate system. The subsequent processing is performed according to the instructions of the user.

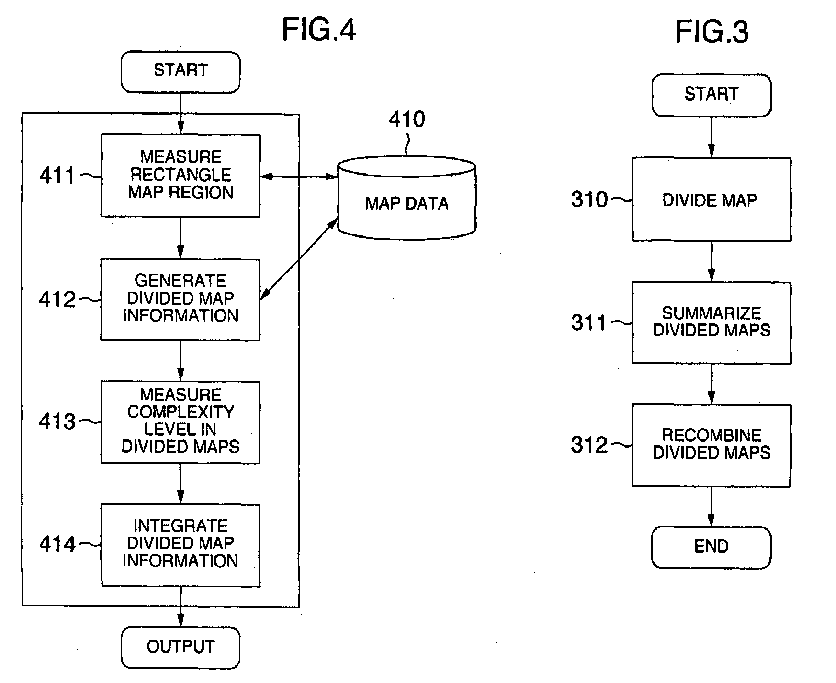

An example procedure of the map summarization processing is explained by referring to Fig. 3. First, the map is divided (step 310). This map division either measures or retrieves values or indices representing a redundancy of the map (degree of complexity) and divides the map into regions based on the redundancy indices. The degree of complexity, the index of redundancy, may be determined by using a fractal dimension described later. The fractal dimension is a constant, not dependent on a scale, so it has an advantage that a judgment can be made using the same reference at all times irrespective of the maps. It is also possible to use a line density and a point density, which make computation easy and enhance the processing speed. While the invention uses the degree of complexity as a measure of redundancy, other indices representing the redundancy may be used. For example, since, in the route search processing, routes near the start and end points may be crowded, the distance from the start/end point can be used as a redundancy. Although the invention has calculated the redundancy (degree of complexity representing the redundancy) from the map data, it is possible to use that portion of information included in the map data which is equivalent to the redundancy. For example, regional characterization, such as town and mountainous region, may be recorded on the map beforehand and the mountainous region may be used as an index representing a redundancy and town as an index representing a non-redundancy. This prevents an area that is likely to be crowded with roads from being summarized excessively. It is noted that this division processing does not have to be performed on each region. For example, the summarization processing may be performed according to a redundancy of each line segment as when the redundancy varies from one road category to another, such as roundabout routes and highways.

Next, for each of the divided maps, the summarization is performed in a way that best matches the associated redundancy (step 311). What kind of summarization best suits each map is decided by using the index that served as a criterion in the preceding division processing. It is noted, however, that the summarization should be such that the ends of the maps will not be moved, in order to maintain the connection between the divided maps.

The last divided maps are recombined to produce one whole map (step 312). If the map is considered as being virtually divided and the summarization is executed in each region, there is no need for recombination of the divided maps.

Each processing or step will be explained as follows.

First, an example of the map division processing (step 310) will be explained by referring to Fig. 4. The map division processing is processing to divide a map into smaller maps (map data of divided regions) according to their redundancies. First, a rectangle covering the whole map is measured (step 411). This requires only determining a circumscribing rectangular area including all objects on the map which can be calculated from the upper and lower limits of coordinate values of the map objects. Next, information on the divided maps is generated (step 412). First, it is assumed that the entire display area of the map is divided into predetermined closed regions. These regions are called blocks, and divided map information is produced by checking and classifying in which block the map elements on the display area are included. In generating the divided map information, if a map element lies on a boundary between the blocks, it is necessary to divide the map element in question. The blocks may be configured into any desired shape, such as square, rectangle and triangle, that can fill the plane of the map. According to the map representation method and scale, an optimal dividing method can be employed.

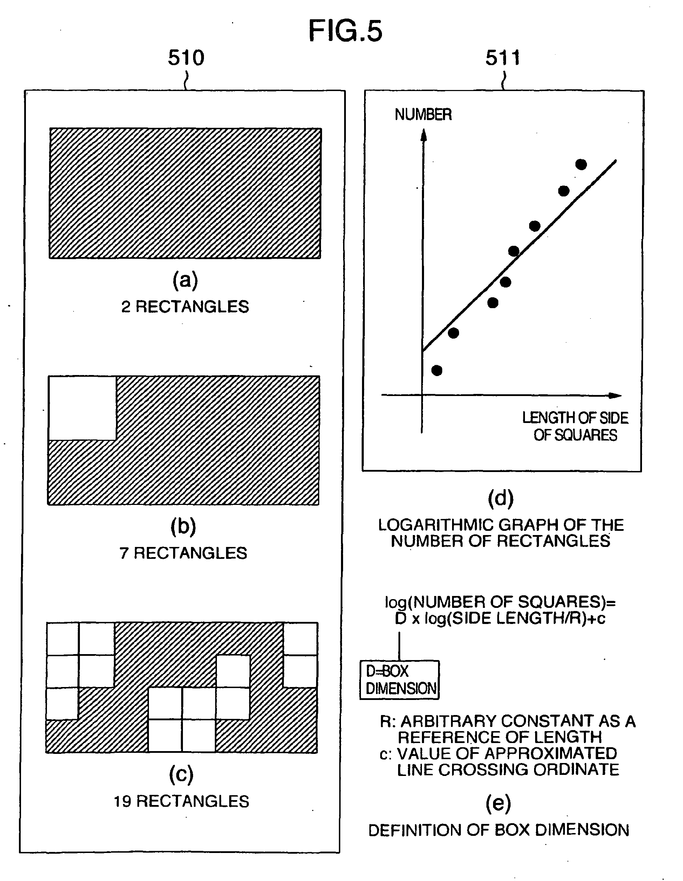

Next, the degree of complexity of each of the divided maps is measured to determine a redundancy index (step 413). In the invention, a fractal dimension of each divided map is used. The fractal dimension is measured by measuring a dimension called a box dimension as shown in Fig. 5. The box dimension is defined as follows. "A rectangle circumscribing a figure is divided into small squares and the number of squares containing a line segment is counted. By changing the length of a side of the squares (step 510), the number of squares is counted. A relation between the length of side and the number of squares is plotted on a logarithmic graph (step 511). An inclination of the plotted line is called a box dimension." This method has an advantage that, in the process of integrating the divided blocks, simply adding up the numbers of squares in the blocks to be integrated can produce a measured dimension of the integrated blocks. Other known measuring methods may be used instead of this method as long as they can calculate the fractal dimension with high accuracy from data having finite accuracy. With the method employed, the dimension can be measured by depicting the line segments as an image, rather than calculating the number of squares containing a line segment. In that case, the counting of squares can be done by counting the number of pixels that are color-painted. This allows the device to exhibit its full performance in the dimension measurement.

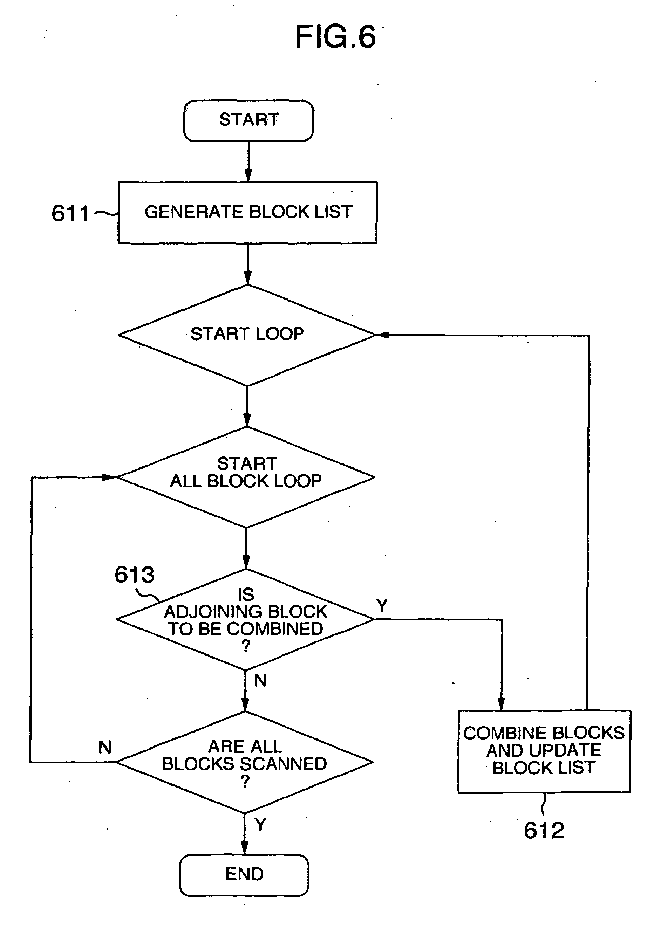

In the last step, the individual blocks are combined in a way shown in Fig. 6 (step 414). First, for each block, a block information list about adjoining blocks and line segments in the block is generated (step 611). Next, a decision is made as to whether the degree of complexity of the adjoining block is close to that of the current block under consideration (step 612). If so, the adjoining block is integrated (613) and this integration processing is repeated to generate a region. At this time, rather than integrating all the blocks having similar degrees of complexity, the integration process is only performed until the number of regions or blocks is below a threshold. This produces an effect of minimizing the processing time. With the above processing, the map can be divided into regions in each of which the degree of complexity and therefore the redundancy are almost constant. It is also noted that the map does not have to be actually divided. If it is guaranteed that no problem will arise even if a parameter is not uniform in the region, simply changing a parameter that can determine the level of summarization for individual objects on the map, such as roads and POIs, can be expected to produce the similar effect.

In each of the regions that are divided according to their redundancies, an optimal level of summarization is estimated from the associated redundancy and the summarization is performed accordingly (step 311). As for the summarizing means, a known means may be used if it can change the level of summarization. The changing of the level of summarization is considered to include, for example, changing, as required, a threshold of point thinning, an upper limit of deformable distance and a parameter in an optimization evaluation function, changing a method, and changing the number of map objects after summarization. An inclusion of escape processing to prevent a figure from getting out of the region after having been summarized can automatically avoid a problem that may arise with map elements included in other divided maps, such as intersections between road line segments.

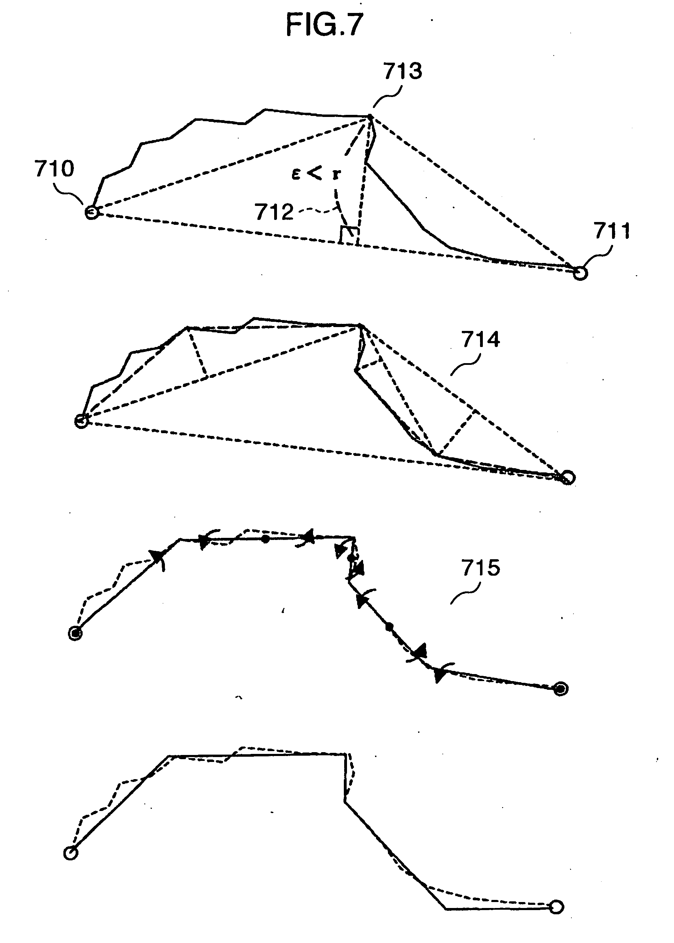

As an example of the divided map summarization processing (step 311), a minimax method and an adjustment of its summarization level will be explained by referring to Fig. 7. The minimax method is a method to thin link-interpolated points. This method basically involves calculating a distance from a line connecting the start point 710 and the end point 711 of the line segments to each point in the line segments and leaving a point 713 whose distance is maximum. In this process, with the remaining point used as a dividing point, two line segments are generated and this processing is performed recursively (step 714). The condition for ending the recursive processing is when the maximum vertical line distance is below a threshold ε. This threshold is taken as an index of summarization level and is changed according to the degree of complexity representing a redundancy. For example, for a fractal dimension d, a constant α that makes ε= α d an appropriate summarization level is determined through recurring trials. In the point thinning by the minimax method, since the end points are not eliminated, using the points on the boundary line of the region as the end points can prevent the problem that would otherwise occur when connecting regions.

Examples of summarization method adjustment include a linearization and spline curve approximation. In this method, if the level of complexity is higher than the threshold, line segments are depicted as a straight line and, if the complexity level is lower than the threshold, they are depicted as an approximated spline curve. A portion that is depicted as a straight line, after being subjected to the point thinning process, may undergo figure generation processing in which each line segment is rotated about its middle point to whichever direction -- horizontal or vertical or 45 degrees -- is closest to the current attitude of the line segment (step 715). As for those points on the boundary between the divided maps, the line segments are rotated about their end point to make the connection of the divided maps smooth. There are lots of other summarization processing that can change the level of summarization, such as one that places points and lines on grids. These may be used. It is also possible to include processing that cannot change the level of summarization. Because these summarization methods have no limitations other than the capability to determine the level of summarization, a desired deformation of configuration can be made according to purposes.

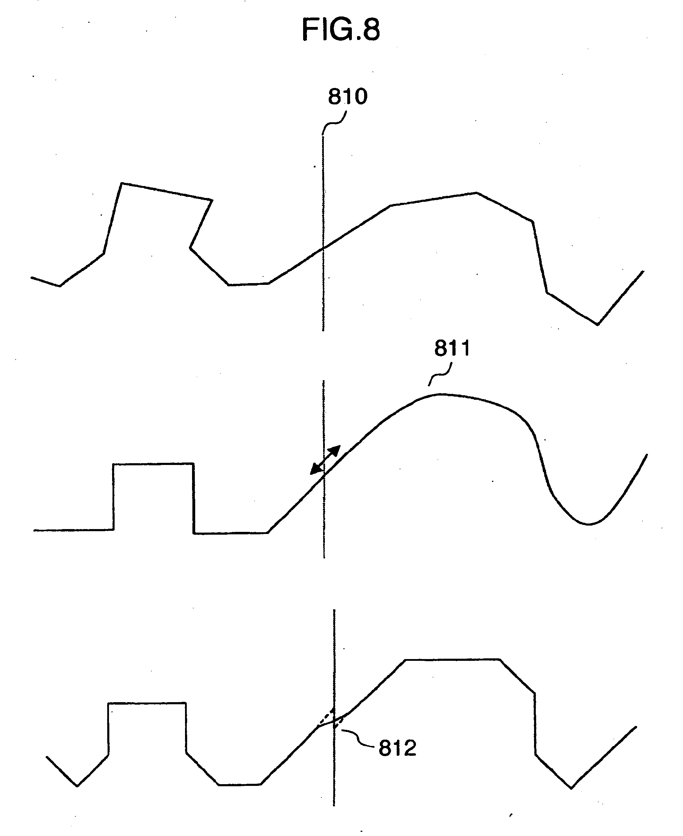

After the above processing is executed, recombination processing shown in step 312 is performed to output the summarized maps as a single map. This recombination processing is performed basically either by first deforming each divided map and then combining their data to form one map, or by reflecting the results on the undivided map. A more natural recombination of maps can be assured by performing a method that does not cause a mismatch at a connection boundary 810, as shown in Fig. 8. For example, in the deformation process using the linearization and spline curve approximation in this embodiment, the angles of line segments on the map boundary are recorded and then the angles of approximated splines and the directions of straight lines may be matched to the recorded angles (step 811). In examples other than this embodiment, an addition of interpolated points (step 812) for smooth connection can make the joints of the divided maps look natural.

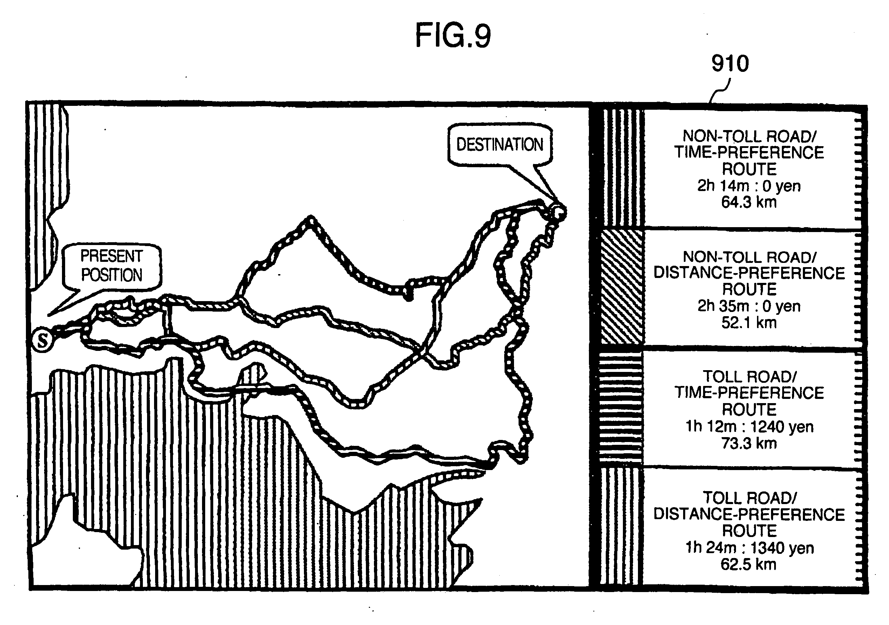

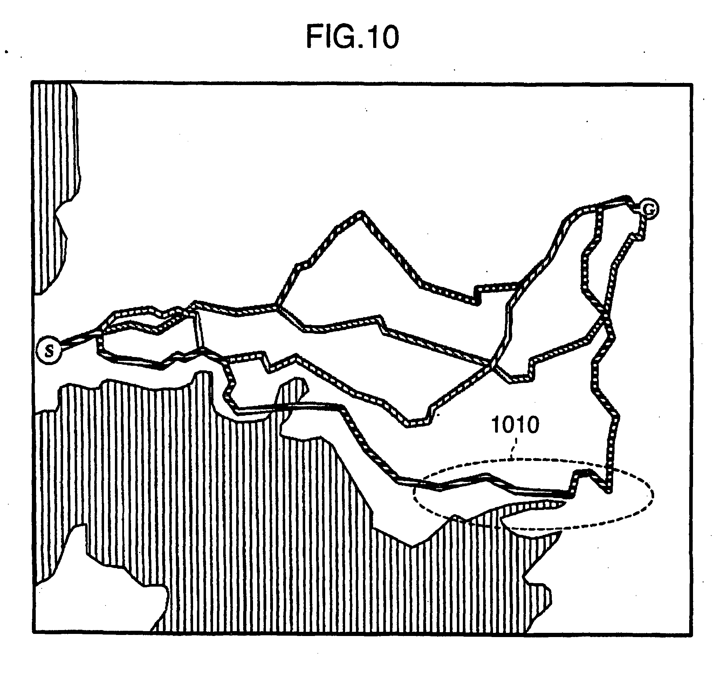

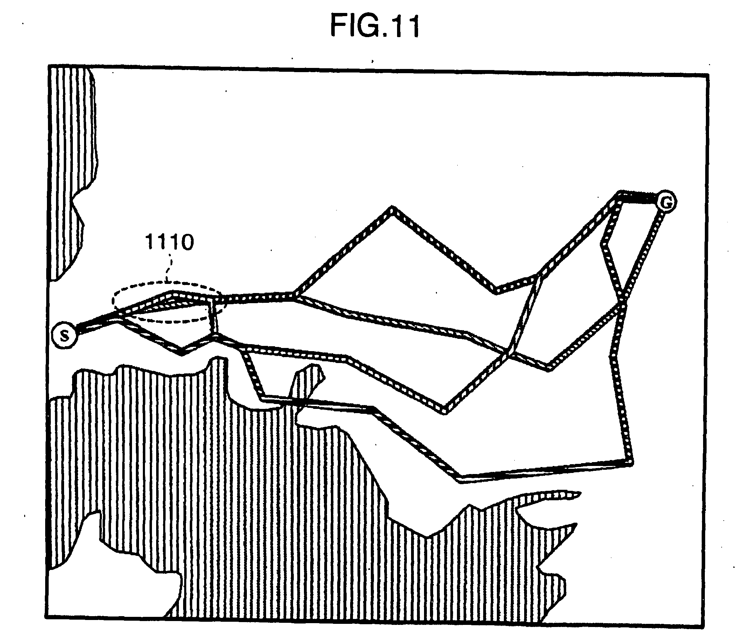

The advantage of applying this invention will be explained by referring to an example case shown in Fig. 9. This diagram is a screen showing routes that have been searched for the user to select a desired one for guidance (step 910). For this screen, a map is generated by summarizing the configuration of the routes. When the routes are summarized at a uniform level of summarization, Fig. 10 and Fig. 11 are produced. Fig. 10 is a map when the summarization level is set small and the point thinning is not performed very much, in order to leave information on details intact. In this case, unnecessary information 1010 is generally left as is and thus the configuration is not much simplified. Fig. 11 on the other hand shows a diagram when a sufficient point thinning is performed. In this diagram, information on details is lost and so also is necessary information 1110. Because in the route search a variety of kinds of configurations, such as roads running through town and mountainous areas and highways, exist simultaneously, the map cannot be summarized easily.

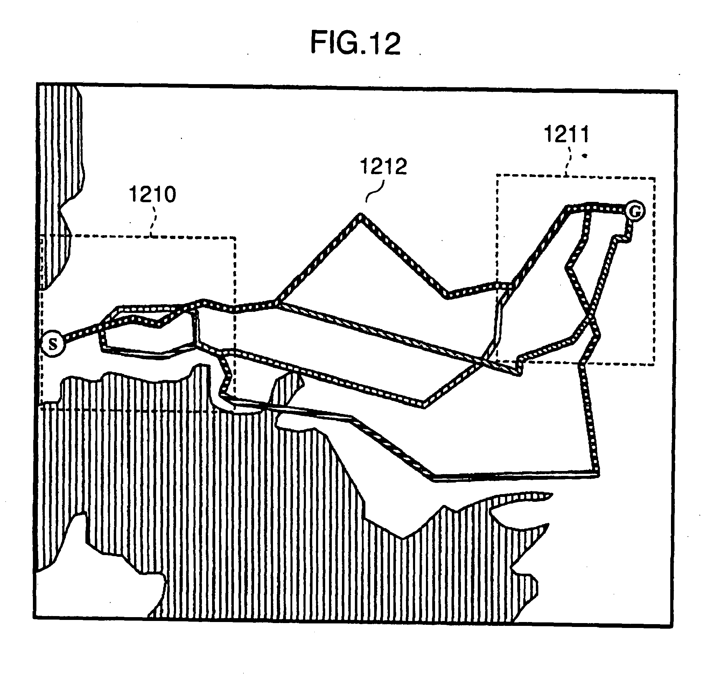

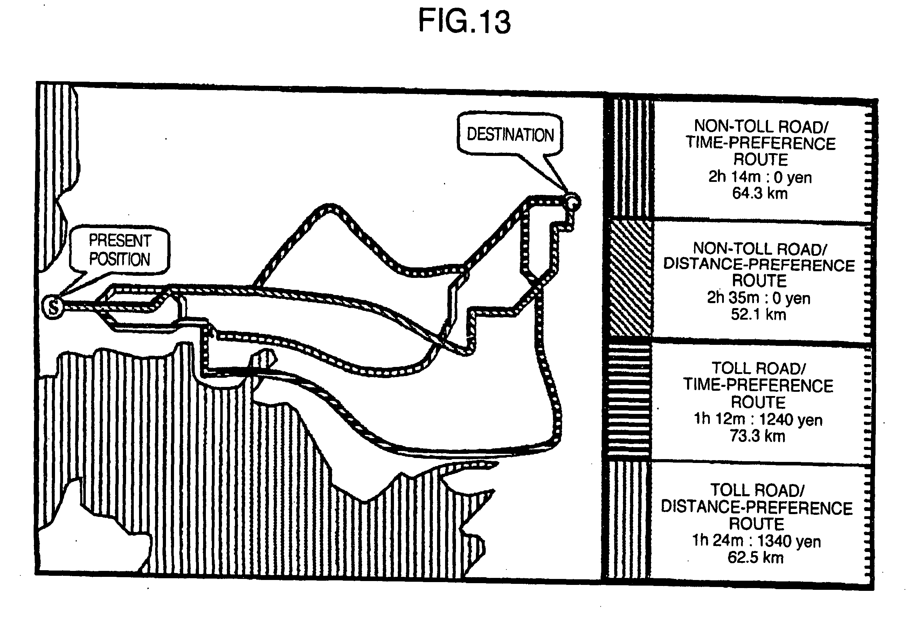

An example result of implementing the embodiment of this invention is shown in Fig. 12. Since complicated regions 1210, 1211 and a sparse region 1212 are given different levels of summary, the thinning is performed at a summarization level suited to the configuration of interest. In a region with a high summarization level, the routes may be depicted as curves and in other regions rotation processing (step 715) may be performed. With these processing, an entire map of routes including various kinds of roads can be summarized and displayed on screen. While this device makes a judgment according to the configurations, the similar effect is produced if characteristics, not limited to the configuration, of streets and highways which are necessary for the summarization processing can be extracted. An example of final screen view of this processing is shown in Fig. 13. In an area with a low level of summarization, this screen depicts routes in a spline curve. In other areas the directions of different routes are aligned. Comparison between Fig. 9 and Fig. 13 shows that the route information is made easily understandable by the summarized presentation. Further, Fig. 13, when compared with Fig. 12, can be seen to emphasize only the information required to distinguish between different routes by applying the curving processing, which hardly leaves detailed configurations, to those areas with a low level of complexity. Fig. 12, Fig. 13 and Fig. 9 may be made selectable for display on screen by an input from the user or by an initial setting.

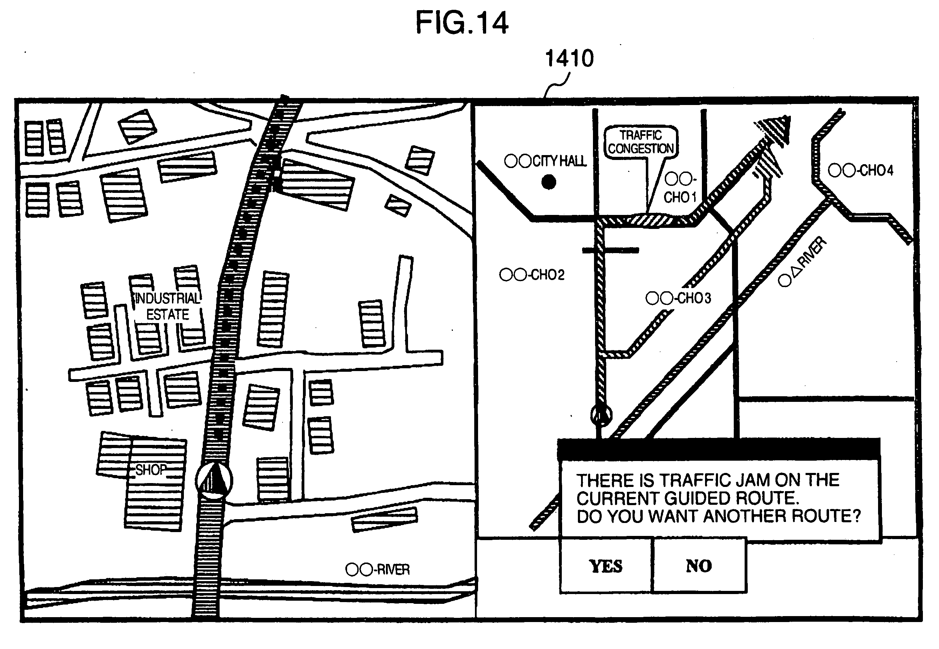

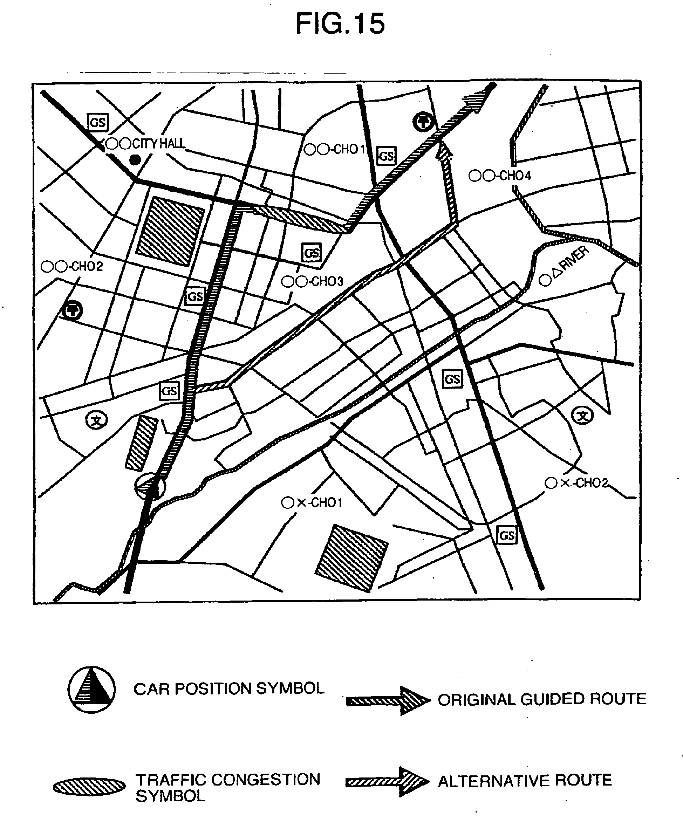

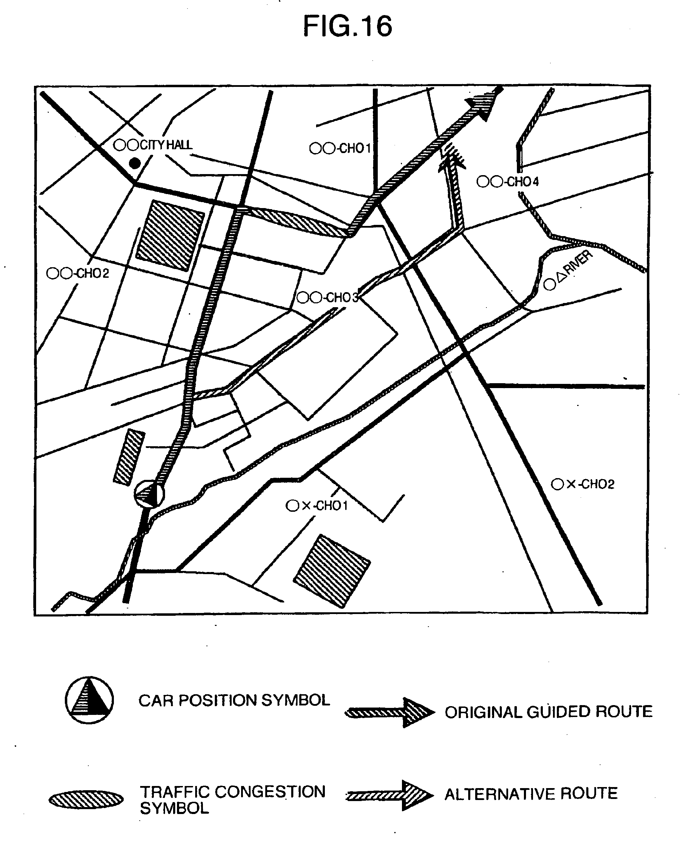

The present invention can be applied to various other situations in addition to the route finding in the car navigation. One such example is a situation in which the user selects a detour in the middle of the route guidance. This is shown in Fig. 14. This diagram shows two views on the display, one for a summarized map (1410) of a roundabout route and one for a normal map, when a traffic jam occurs in the route being guided. This map is summarized with a uniform summarization level. From the original map of Fig. 15 narrow roads are categorically left out and the remaining roads are represented in straight, vertical or horizontal lines. This diagram allows for quick understanding of a positional relation between the route being guided and the roundabout route. However, there is no information about a branch point connecting to the roundabout route or a merge point, making it impossible for the user to know where he or she will be able to move out of the current route. If a diagram with a reduced summarization level, such as shown in Fig. 16, is used, although the amount of information increases, the map becomes complicated and redundant, making it hard for the user to quickly understand the displayed information.

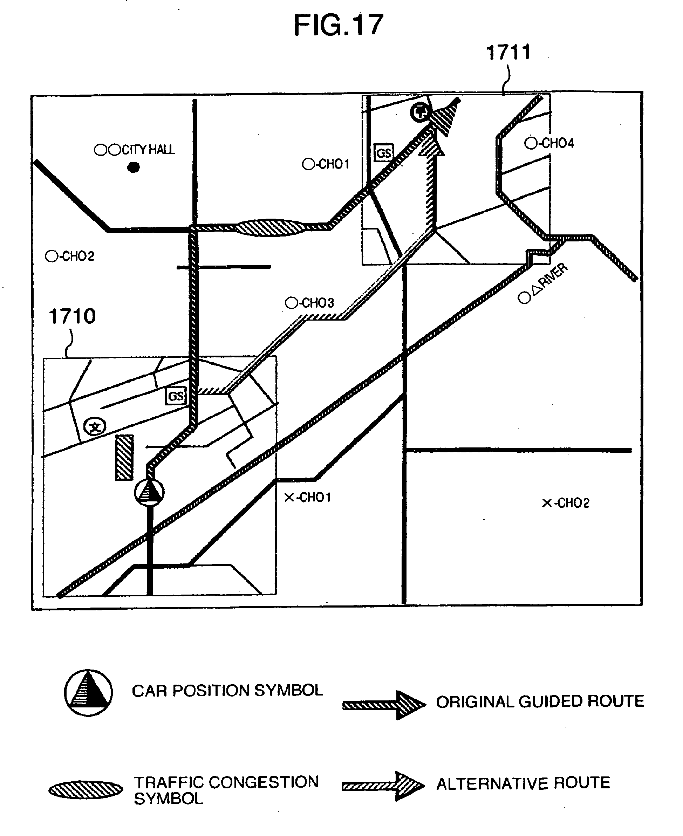

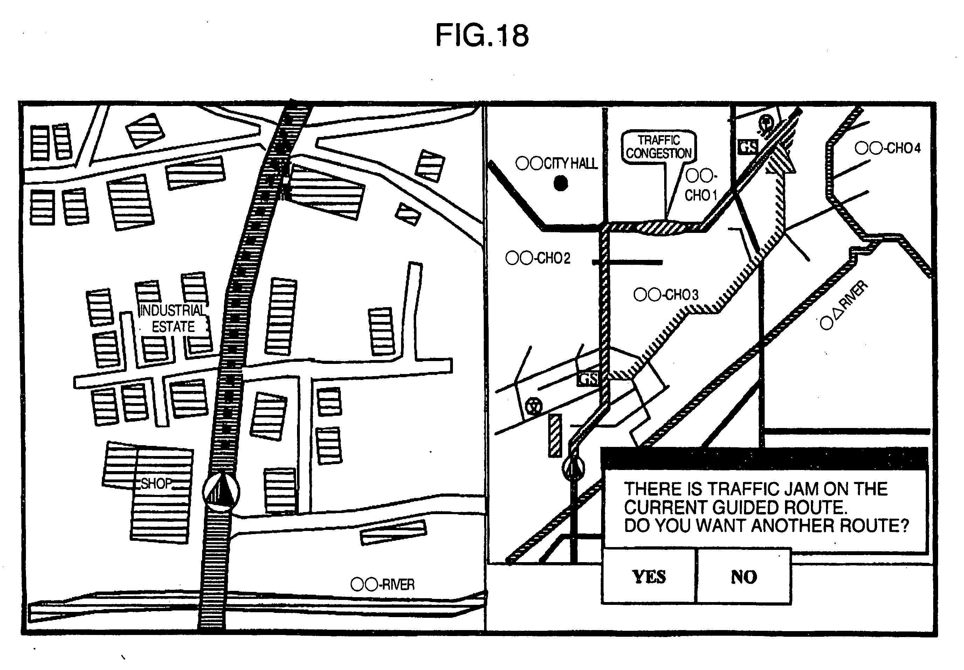

To deal with this situation, this invention is applied to the map by giving a high redundancy index to an area near the present location and an area near the merge point. This is shown in Fig. 17. In only those regions 1710, 1711 with a feature of being close to a start point or a destination, the level of summarization is reduced to display many map objects. It is also possible to show detailed information, such as place names and small rivers. As a result, a map (Fig. 18) can be generated that allows the user to understand the positional relation between the guided route and the roundabout route and also to obtain other detailed information. This effect can be seen by comparing Fig. 14 and Fig. 18.

The above embodiment offers the following advantages.
(1) Since the summarization considering the redundancies of regions is performed on each region, it is possible to leave necessary information intact in a region that is not redundant. Thus, the user can receive a desirable route guidance capable of presenting information necessary for route selection.
(2) Since information in a redundant region which is not required to be emphasized can be omitted, the user can quickly find the necessary information he is looking for.
(3) In displaying an entire route, since the summarization can be limited to redundant portions of the map, the amount of configurations that can be summarized without any problem becomes greater than that summarized by the conventional method, thus reducing the possibility of trouble.

Although this specification has explained embodiments as applied to the car navigation, this invention can also be applied to any device that displays map information. This also applies not only to roads but also to any map objects making up the map, including background data such as coastlines and configurations of buildings. Coastlines in particular are a fractal figure, so the level of complexity that is calculated from the fractal dimension may be effectively used as a measure of redundancy in setting the summarization level for each kind of coastlines. Further, the processing performed in this invention can be implemented by reading a program into a computer. The processing may also be executed by cooperative actions of software and hardware.

It should be further understood by those skilled in the art that although the foregoing description has been made on embodiments of the invention, the invention is not limited thereto and various changes and modifications may be made without departing from the scope of the appended claims.

## Claims

1. A map processor comprising:
a storage unit (112) to record map data; and
a control unit (111),
wherein the control unit (111) is adapted to read map data of an area to be displayed from the storage unit (112), and to divide the map data into a plurality of regions,
to determine a redundancy index for each of the plurality of regions,
to determine each redundancy index as a level of complexity of map elements by using a fractal dimension of the map data in each region,
to summarize the plurality of regions with summarization methods determined according to the redundancy indices,
to recombine the map data of the plurality of summarized regions and
to present the recombined map data on a display means.

2. A map processor according to claim 1, wherein the control unit is adapted to divide the map data into the plurality of regions according to the redundancy indices calculated from the map data.

3. A map processor according to at least one of claims 1 to 2, wherein the control unit is adapted to perform the summarization by changing the number of map el ments in the map data according to the redundancy index or by changing a parameter used in the summarization.

4. A map processor according to at least one of claims 1 to 3, wherein the control unit is adapted to store angles of line segments at a boundary between the regions, before performing the recombination.

5. A navigation device comprising:
a storage unit (112), to store map data;
a position acquisition unit (113), to acquire a present location;
an input unit (114), to receive instructions entered by a user;
a control unit (111), to process the map data; and
a display unit (115), to display the processed map data;
wherein the control unit (111) is adapted to search for routes between the present location acquired by the position acquisition unit and a destination acquired through the input unit (114),
to read the map data including the routes from the storage unit (112) and to divide the map data into a plurality of regions, to determine a redundancy index for each of the plurality of regions,
to determine each redundancy index as a level of complexity of map elements by using a fractal dimension of the map data in each region,
to summarize the plurality of regions with summarization methods determined according to the redundancy indices, to recombine the map data of the plurality of summarized regions, and
to present the recombined map data on the display unit (115) for route guidance.

6. A navigation device according to claim 5, wherein the control unit is adapted to perform the summarization by switching between a conversion of the configuration of line segments into curves and a conversion of the configuration of line segments into straight lines.

## Patentansprüche

1. Kartenprozessor, der umfasst:
eine Speichereinheit (112), um Kartendaten aufzuzeichnen; und
eine Steuereinheit (111),
wobei die Steuereinheit (111) dazu ausgelegt ist, Kartendaten eines anzuzeigenden Gebiets aus der Speichereinheit (112) zu lesen und die Kartendaten in mehrere Regionen zu unterteilen,
einen Redundanzindex für jede der mehreren Regionen zu bestimmen,
jeden Redundanzindex als einen Komplexitätsgrad von Kartenelementen unter Verwendung einer fraktalen Dimension der Kartendaten in jeder Region zu bestimmen,
die mehreren Regionen mit Zusammenfassungsverfahren, die gemäß den Redundanzindizes bestimmt werden, zusammenzufassen,
die Kartendaten der mehreren zusammengefassten Regionen erneut zu kombinieren und
die erneut kombinierten Kartendaten auf einem Anzeigemittel darzustellen.

2. Kartenprozessor nach Anspruch 1, wobei die Steuereinheit dazu ausgelegt ist, die Kartendaten gemäß den Redundanzindizes, die aus den Kartendaten berechnet werden, in mehrere Regionen zu unterteilen.

3. Kartenprozessor nach wenigstens einem der Ansprüche 1 bis 2, wobei die Steuereinheit dazu ausgelegt ist, die Zusammenfassung durch Ändern der Anzahl von Kartenelementen in den Kartendaten gemäß dem Redundanzindex oder durch Ändern eines bei der Zusammenfassung verwendeten Parameters auszuführen.

4. Kartenprozessor nach wenigstens einem der Ansprüche 1 bis 3, wobei die Steuereinheit dazu ausgelegt ist, Winkel von Liniensegmenten an einer Grenze zwischen den Regionen zu speichern, bevor die erneute Kombination ausgeführt wird.

5. Navigationsvorrichtung, die umfasst:
eine Speichereinheit (112), um Kartendaten zu speichern;
eine Positionserfassungseinheit (113), um einen momentanen Ort zu erfassen;
eine Eingabeeinheit (114), um Befehle, die von einem Anwender eingegeben werden, zu empfangen;
eine Steuereinheit (111), um die Kartendaten zu verarbeiten; und
eine Anzeigeeinheit (115), um die verarbeiteten Kartendaten anzuzeigen;
wobei die Steuereinheit (111) dazu ausgelegt ist, Routen zwischen dem durch die Positionserfassungseinheit erfassten momentanen Ort und einem durch die Eingabeeinheit (114) erfassten Ziel zu suchen,
die Kartendaten einschließlich der Routen aus der Speichereinheit (112) zu lesen und die Kartendaten in mehrere Regionen zu unterteilen,
einen Redundanzindex für jede der mehreren Regionen zu bestimmen,
jeden Redundanzindex als einen Komplexitätsgrad von Kartenelementen unter Verwendung einer fraktalen Dimension der Kartendaten in jeder Region zu bestimmen,
die mehreren Regionen mit Zusammenfassungsverfahren, die gemäß den Redundanzindizes bestimmt werden, zusammenzufassen,
die Kartendaten der mehreren zusammengefassten Regionen erneut zu kombinieren und
die erneut kombinierten Kartendaten auf der Anzeigeeinheit (115) für eine Routenführung darzustellen.

6. Navigationsvorrichtung nach Anspruch 5, wobei die Steuereinheit dazu ausgelegt ist, die Zusammenfassung durch Schalten zwischen einer Umwandlung der Konfiguration von Liniensegmenten in Kurven und einer Umwandlung der Konfiguration von Liniensegmenten in gerade Linien auszuführen.

## Revendications

1. Processeur de cartographie comportant :
une unité de mémorisation (112) pour enregistrer des données cartographiques, et
une unité de commande (111),
l'unité de commande (111) étant adaptée pour lire des données cartographiques d'une zone à afficher à partir de l'unité de mémorisation (112), et pour diviser les données cartographiques en une pluralité de régions,
pour déterminer l'indice de redondance pour chaque région parmi la pluralité de régions,
pour déterminer chaque indice de redondance en tant que niveau de complexité d'éléments cartographiques en utilisant une dimension fractale des données cartographiques de chaque région,
pour récapituler la pluralité de régions à l'aide de procédés de récapitulation déterminés conformément aux indices de redondance,
pour recombiner les données cartographiques de la pluralité de régions récapitulées, et
pour présenter les données cartographiques recombinées sur des moyens d'affichage.

2. Processeur de cartographie selon la revendication 1, dans lequel l'unité de commande est adaptée pour diviser les données cartographiques en une pluralité de régions conformément aux indices de redondance calculés à partir des données cartographiques.

3. Processeur de cartographie selon au moins l'une des revendications 1 à 2, dans lequel l'unité de commande est adaptée pour effectuer la récapitulation en changeant le nombre d'éléments cartographiques dans les données cartographiques conformément à l'indice de redondance ou en changeant un paramètre utilisé dans la récapitulation.

4. Processeur de cartographie selon au moins l'une des revendications 1 à 3, dans lequel l'unité de commande est adaptée pour mémoriser des angles de segments de ligne au niveau d'une frontière entre les régions, avant d'effectuer la recombinaison.

5. Dispositif de navigation comportant :
une unité de mémorisation (112) pour mémoriser des données cartographiques,
une unité d'acquisition de position (113), pour acquérir une position actuelle,
une unité d'entrée (114), pour recevoir des instructions entrées par un utilisateur,
une unité de commande (111), pour traiter les données cartographiques, et
une unité d'affichage (115) , pour afficher les données cartographiques traitées,
dans lequel l'unité de commande (111) est adaptée pour rechercher des itinéraires entre la position actuelle acquise par l'unité d'acquisition de position et une destination acquise via l'unité d'entrée (114),
pour lire les données cartographiques incluant les itinéraires à partir de l'unité de mémorisation (112) et pour diviser les données cartographiques en une pluralité de régions,
pour déterminer un indice de redondance pour chaque région parmi la pluralité de régions,
pour déterminer chaque indice de redondance en tant que niveau de complexité d'éléments cartographiques en utilisant une dimension fractale des données cartographiques de chaque région,
pour récapituler la pluralité de régions à l'aide de procédés de récapitulation déterminés conformément aux indices de redondance,
pour recombiner les données cartographiques de la pluralité de régions récapitulées, et
pour présenter les données cartographiques recombinées sur l'unité d'affichage (115) pour un guidage d'itinéraire.

6. Dispositif de navigation selon la revendication 5, dans lequel l'unité de commande est adaptée pour effectuer la récapitulation en effectuant une commutation entre une conversion de la configuration de segments de ligne en courbes et une conversion de la configuration de segments de ligne en lignes droites.
